# EUROPEAN PATENT APPLICATION

(11) **EP 3 248 714 A1**
(43) Date of publication of application: **29.11.2017**
(21) Application number: 17173127.6
(22) Date of filing: 26.05.2017
(51) Int. Cl.: B22F 1/00, B22F 1/02, F28C 3/16, B22F 3/105

(54) **POWDER PROCESSING SYSTEM AND METHOD FOR POWDER HEAT TREATMENT**

(30) Priority: 26.05.2016 US 201615154068
(71) Applicant: United Technologies Corporation, Farmington, CT 06032 (US)
(72) Inventor: SHE, Ying, East Hartford, CT 06118 (US); SHARON, John A., Manchester, CT 06042 (US); NARDI, Aaron T., East Granby, CT 06026 (US)
(74) Representative: Hull, James Edward

(57) **Abstract**

A method for heat treating metal alloy powder (12) includes (a) introducing metal alloy powder (12) to a chamber having a floor (24) and a sidewall (22); (b) flowing a fluidizing gas through the floor (24) and into the chamber to fluidize the metal alloy powder (12) in the chamber; (c) flowing an additional gas (58) through the sidewall (22) into the chamber; and (d) heating the chamber to heat treat the metal alloy powder (12) in the chamber.

## Description

### BACKGROUND OF THE INVENTION

The subject matter disclosed herein relates generally to the field of additive manufacturing. More particularly, the present disclosure relates to pre-treatment of powders in additive manufacturing processes using fluidized beds.

Metal alloy powders are a common feedstock for several additive manufacturing processes from powder bed laser fusion to cold spray. Depending on the feedstock synthesis (atomization, spray dry, etc.) and handling history (packaged under inert gas, exposed to atmosphere, etc.) these metal powders can require cleaning and/or heat treatments before they are employed in an additive build. For example, aluminum alloy powders often need to be degassed prior to cold spray consolidation. The degassing process removes any contaminants adsorbed on the surface of aluminum alloy powder particles, including water moisture. Without the degassing of the aluminum powder, the adsorbed water moisture can become embedded into the parts to be manufactured. Any subsequent exposure to elevated temperatures can then generate defects in the form of blisters and cracks from the evolution of hydrogen due to the breakdown of the water molecules at the elevated process temperature. Therefore degassing is an important step to the creation of parts with a lower propensity for defects.

One approach for powder degassing is the dynamic vacuum method wherein powder is loaded into a vessel and the vessel is filled with an inert gas while at temperature. A vacuum is then pulled to evacuate the gas. Fresh gas is then reintroduced into the vessel and this procedure is repeated several times. While effective, this degassing process is lengthy and energy-intensive.

A powder degassing process has been developed using a fluidized bed, as disclosed in WO 2014/176045 and WO 2015/023439. This degassing process has been demonstrated to be effective. However, depending on the alloy and necessary treatment regimen, powder attachment issues can arise. Specifically, if the treatment temperature is high enough that surfaces of the metal powders become soft and sticky, the powder particles can begin to adhere to the internal walls of the fluidized bed.

### SUMMARY OF THE INVENTION

From a first aspect, a method for heat treating metal alloy powder is provided, comprising (a) introducing metal alloy powder to a chamber having a floor and at least one sidewall; (b) flowing a fluidizing gas through the floor and into the chamber to fluidize the metal alloy powder in the chamber; (c) flowing an additional gas through the sidewall into the chamber; and (d) heating the chamber to heat treat the metal alloy powder in the chamber.

In an exemplary embodiment, the flowing step can comprise flowing the additional gas into the chamber at a different rate than the fluidizing gas.

In an exemplary embodiment, the flowing step can comprise flowing the additional gas into the chamber at a lower flow rate than the fluidizing gas.

In an exemplary embodiment, the chamber comprises an inner chamber having the floor and the sidewall, and an outer chamber enclosing the inner chamber, step (b) comprises feeding the fluidizing gas to the floor of the inner chamber through a tube connected to the floor, and step (c) comprises feeding the additional gas to the outer chamber and through the sidewall to the inner chamber.

In an exemplary embodiment, the chamber is within a furnace, and step (d) comprises heating the furnace.

In an exemplary embodiment, the fluidizing gas is different from the additional gas.

In an exemplary embodiment, the fluidizing gas and the additional gas are preheated before introducing to the chamber.

In an exemplary embodiment, the fluidizing gas is selected from the group consisting of nitrogen, argon, helium and combinations thereof.

In an exemplary embodiment, the floor is a porous floor and the sidewall is a porous sidewall. Step (b) flows the fluidizing gas through the porous floor and step (c) flows the additional gas through the porous sidewall.

In an exemplary embodiment, the metal alloy powder is aluminum alloy powder, and the heating step degasses the aluminum alloy powder.

In an exemplary embodiment, at least one of the additional gas and the fluidizing gas is a reactive gas for depositing a coating on the metal alloy powder.

In an exemplary embodiment, the additional gas is a reactive gas for depositing a coating on the metal alloy powder.

In an exemplary embodiment, heat treated metal alloy powder is removed from the chamber and used in an additive manufacturing process.

A system for heat treating metal alloy powder is also provided, comprising an inner chamber having a porous floor or a floor comprising a porous disk, and a porous sidewall; an outer chamber, the inner chamber being inside of the outer chamber and defining an annular space between the outer chamber and the inner chamber, wherein the outer chamber and the inner chamber are inside a furnace; a source of fluidizing gas connected to the porous floor through the annular space; and a source of additional gas communicated with the porous sidewall through the annular space.

In an exemplary embodiment, a tube extends from the source of fluidizing gas, through the annular space, to the porous floor.

In an exemplary embodiment, the tube is communicated with the porous floor through a manifold on the inner chamber and enclosing the porous floor.

In an exemplary embodiment, the system has an outlet from the inner chamber passing through the outer chamber and the furnace for outlet of the fluidizing gas and the additional gas from the inner chamber.

In an exemplary embodiment, the system has a thermocouple communicated with the annular space, mass flow controllers and pressure sensors operatively associated with the source of fluidizing gas and the source of additional gas, wherein the thermocouple, the mass flow controllers, the pressure gauge and the furnace are connected with a control unit for controlling flow rate of the fluidizing gas and the additional gas and a temperature to which the furnace is heated.

In an exemplary embodiment, the system has a screen positioned over pores in the porous sidewall to prevent escape of metallic alloy powder through the pores.

In an exemplary embodiment, the metallic alloy powder comprises aluminum alloy powder, and the inner chamber is made of or coated with stainless steel, porous ceramic or mixtures thereof.

The details of one or more embodiments of the disclosure are set forth in the accompanying drawings and the description below. Other features, objects, and advantages of the disclosure will be apparent from the description and drawings, and from the claims.

### BRIEF DESCRIPTION OF THE DRAWINGS

FIG. 1 is a schematic illustration of a system according to one embodiment of the disclosure;
FIG. 2 is an enlarged view of a portion of the inner and outer chamber assembly of FIG. 1; and
FIG. 3 is an enlarged view of the sidewall of the inner chamber according to an embodiment of the disclosure.

Like reference numbers and designations in the various drawings indicate like elements.

### DETAILED DESCRIPTION

The disclosure relates to a system and method for heat treating additive powders using a fluidized bed. According to the disclosure, additive powders such as metal alloy powders are heat treated while preventing high temperature powders from sticking to walls of the system.

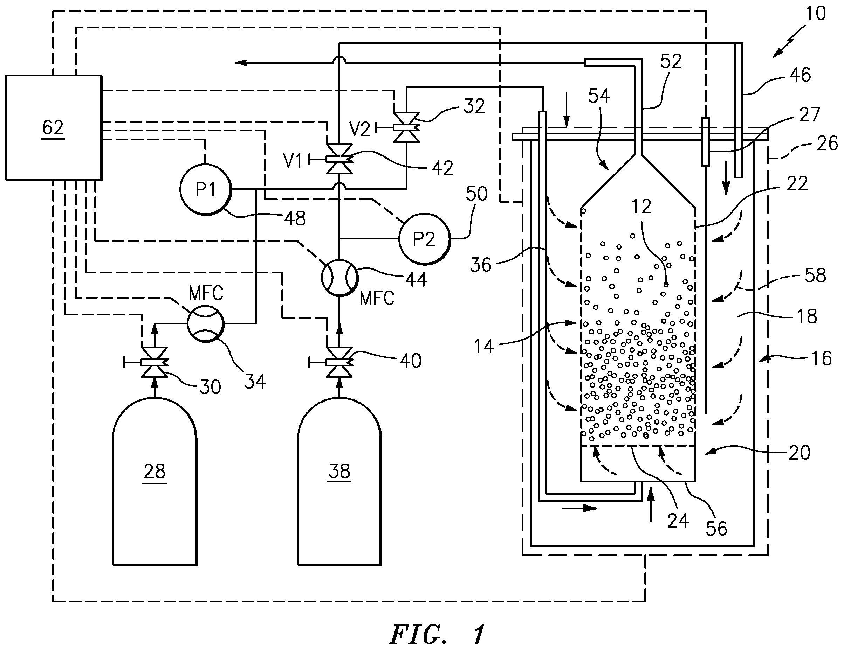

FIG. 1 shows a fluidized bed system 10 for heat treating powder or particles 12 such as metal alloy powder. In this embodiment, system 10 has an inner chamber 14 positioned within an outer chamber 16. An annular space 18 is defined between outer chamber 16 and inner chamber 14.

Inner chamber 14 can have a bottom portion 20 and at least one sidewall 22. While shown schematically in the drawings, inner chamber 14 could be shaped cylindrically or in any other shape suitable for a particular purpose. In the embodiment illustrated, inner chamber 14 should be considered to be cylindrical. Other configuration having two or more sidewalls are possible. In bottom portion 20, inner chamber 14 has an at least partially porous floor 24 which can be provided as a porous disk which can be circular, oval or any other shape to fit the shape of inner chamber 14. In addition, sidewall 22 can also be porous as shown by the dashed line illustration in FIG. 1.

Porous floor 24 can be entirely porous, that is, it may have pores distributed over its entire surface area, or may have zones or areas of pores, as desired. Porous floor 24 can be sufficiently porous to allow flow of a fluidizing gas while providing sufficient support for a bed of powder to be fluidized and heat treated. Likewise, sidewall 22 also can be sufficiently porous to allow a gas flow through sidewall 22 while also preventing powder 12 from escaping inner chamber 14.

FIG. 1 also shows inner chamber 14 and outer chamber 16 within a furnace 26. A thermocouple 27 can be positioned to take temperature measurements from within annular space 18.

A source 28 of a first or fluidizing gas can be communicated through valves 30, 32 and a mass flow controller 34, through a pipe 36 or other conduit or tube, to bottom 20 of inner chamber 14.

A source 38 of a second or additional gas can be communicated through valves 40, 42 and a mass flow controller 44 to an inlet or tube 46 or other such conduit communicated with annular space 18.

Pressure gauges 48, 50 can be placed along lines for feeding gas from first and second sources 28, 38, respectively.

A gas outlet 52 can be provided, for example extending from an upper portion 54 of inner chamber 14 to exterior of furnace 26 for exiting of fluidizing and additional gas from inner chamber 14.

In operation, furnace 26 is heated to a desired temperature suitable for treating metal alloy powder as desired, and a first or fluidizing gas flows from source 28 to pipe 36 and is introduced into bottom portion 20 of inner chamber 14, where the gas passes through porous floor 24. This gas is fed such that the flow rate fluidizes powder within inner chamber 14. Second or additional gas flows from source 38 through inlet 46 and into annular space 18, and then passes through porous sidewall 22 into inner chamber 14. This gas is fed at a rate sufficient to keep powder 12 from too much contact with sidewall 22. This helps to prevent such powder from sticking to sidewall 22 during heat treatment. Also, it should be appreciated that fluidizing gas fed through pipe 36 is preheated from heat of furnace 26 as it passes through pipe 36 within annular space 18. Further, the additional gas fed through annular space 18 is also preheated within annular space 18. The temperature to which powders are treated inside inner chamber 14 can reach levels where the powders can become sticky or tacky. Therefore, the flow of additional gas through porous sidewall 22 can keep such powder from having extended contact with sidewall 22 and thereby help to prevent such powder from sticking to sidewall 22.

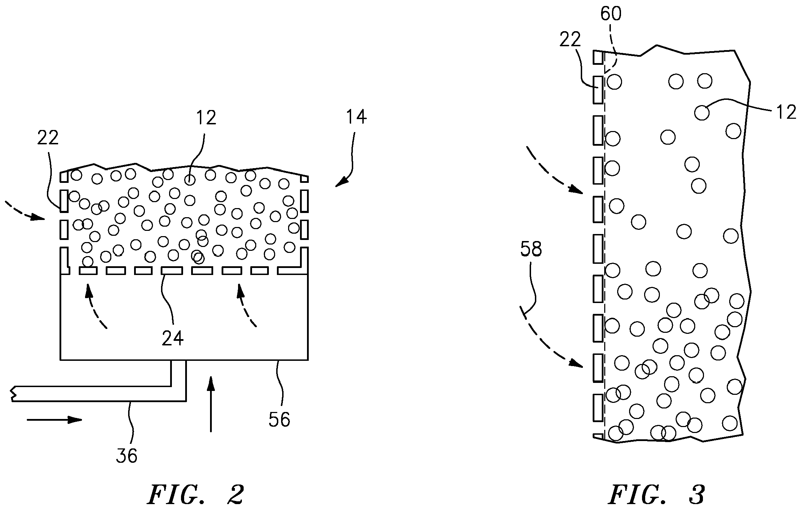

Referring also to FIG. 2, an enlarged view of bottom portion 20 of inner chamber 14 is provided. Pipe 36 carries fluidizing gas and can be communicated with a manifold 56 attached at a bottom portion 20 of inner chamber 14. Manifold 56 can cover porous floor 24 such that gas flow into manifold 56 flows only to porous floor 24. This flow of fluidizing gas passes through porous floor 24 and fluidizes powder 12 within inner chamber 14.

Referring also to FIG. 3, an enlarged view of a sidewall 22 of inner chamber 14 is provided. FIG. 3 shows additional gas represented schematically by arrows 58 which pass through porous sidewall 22 and into inner chamber 14. This flow, as set forth above, can be directed at a rate which is sufficient to keep powder 12 from sticking to sidewall 22. FIG. 3 also shows a screen 60 which can be positioned over pores in porous sidewall 22 to help prevent powder 12 from exiting inner chamber 14 through sidewall 22.

It should be appreciated that the fluidizing gas from the first source 28 and the additional gas from the second source 38 can be fed at the same or at different rates. In one embodiment, the fluidizing gas is fed at a greater flow rate than the additional gas, as the fluidizing gas requires more velocity to properly fluidize the bed of powders, while the additional gas may not require this same amount of velocity to keep powders from sticking to sidewall 22. Further, too much additional gas flow rate could lead to undesirable fast fluidization. In other embodiments, fluidizing gas and additional gas could be fed at the same flow rate and/or velocity, or with a greater flow rate or velocity for the additional gas, as may be desired.

It should also be appreciated that the flow of gasses into inner chamber 14 can be influenced by thickness of porous floor 24 and sidewall 22, as well as the shape and contour of pores in floor 24 and sidewall 22.

Referring back to FIG. 1, another embodiment includes a control unit 62 which can be provided and communicated with each of valves 30, 32, 40, 42, mass flow controllers 34, 44, thermocouple 27, pressure gauges 48, 50 and furnace 26 to control the process and ensure proper fluidizing of powders within inner chamber 14, at the intended temperature, and with reduced or eliminated chance of sticking of powders to sidewall 22. This is illustrated schematically in FIG. 1 with dash-line connections shown from control unit 62 to these various components to show the operative association or communication between these components.

A system and method as disclosed herein are useful for a variety of situations wherein powders, especially metal alloy powders, are to be heat-treated. According to one embodiment, the powders to be treated can be aluminum alloy powders which must be degassed before they can be properly used in an additive manufacturing process. Other types of powders which can be treated include but are not limited to copper, titanium, steel, stainless steel, nickel, and alloys and combinations thereof.

Further, the heat treatment process can accomplish other objectives besides degassing of the powder. Such heat treatment can be carried out using reactive gases for depositing a coating on the powder. For example, it may be desirable to coat copper powder with an alumina coating, and one or both of fluidizing gas and additional gas can contain a precursor to an alumina coating to be deposited on the copper powder. Other heat treatments include homogenizing of powder, solutionizing of powder and the like. An example of such different processes can be treatment of an aluminum alloy powder with magnesium, with the intent to uniformly distribute the magnesium through the aluminum alloy powder and thereby alter the structure of the particles. This can be accomplished by including a magnesium source in one or both of fluidizing and additional gases.

The flow rates of gas to be used can depend heavily upon the powder(s) to be treated, the gas used, geometry of the inner and outer chambers and the temperature and pressure conditions. In one embodiment of the disclosure, the flow rate of the fluidizing gas is higher in order to fluidize the powders, while the flow rate of the additional gas is lower, and need only be sufficient to create a boundary along sidewall 22 to prevent sticking.

The powders to be treated can generally have a particle size in the range of between about 5 µm and about 150 µm, more specifically between about 10 µm and about 70 µm.

Once treatment of the metal alloy powder is complete, the treated powder can be removed from inner chamber 14 and then used for their intended purpose, for example in an additive manufacturing process. The powder can be removed from inner chamber 14 by increasing flow rate of gas sufficiently to entrain and remove the powder through outlet 52, or inner chamber 14 can be inverted with the top portion removed to allow removal in this manner.

It should also be appreciated that the shape and configuration of bottom 20 of inner chamber 14 can be altered to meet different process parameters as desired.

The temperature to which furnace 26 is heated can vary depending upon the powder to be treated and the intended treatment. In addition, when a reactive process is intended, where one or both of fluidizing gas and additional gas contains constituents for chemical reaction with the powders, the amount of heat needed from furnace 26 can be adjusted based upon whether and to what extent the reactions are exothermic or endothermic in nature.

The heating and flowing steps of the process are not required to be conducted in any particular order. In one embodiment, the furnace can be operated first to bring up the temperature in the annular space such that the flow of gas through this space is preheated. In this embodiment, the heating step would be started first, and then the flowing of gases would be substantially simultaneous. In another embodiment, flow of fluidizing gas can be started first, to fluidize the bed of powder, followed by flow of the additional gas to prevent sticking or adhesion of the heated powder to the wall surfaces of inner chamber 14.

The outer chamber 16 can be a solid and substantially gas impermeable structure since this chamber is to contain inner chamber 14 and it is not generally intended for the gas or powder to exit this chamber except as intended through outlet 52. Further, outer chamber 16 defines the outer boundary of annular space 18 and confines the additional gas within this space to ensure flow through porous sidewall 22 as intended.

In addition to the flow of additional gas through the porous sidewall, other steps can also be taken to help prevent powder from sticking or adhering to the walls of the inner chamber. For example, the material of the inner chamber and/or of a coating applied on the inner chamber, can be selected such that there is a poor material couple between the powder to be treated and surfaces of the inner chamber, that is, the materials will not be inclined to stick to each other. An example of such material matching would be, if copper powder is to be treated, the inner chamber could be made from or coated with alumina. Other good coating options for the vessel wall to prevent interaction with the metal powder are Al₂O₃, Y₂O₃, BN, ZrO₂, and TiN.

The disclosure provides for heat treatment of powder at elevated temperatures using a fluidized bed while minimizing issues raised with respect to sticking of powder at such high temperatures to the surfaces of the chamber in which they are treated.

One or more embodiments of the present invention have been described. Nevertheless, it will be understood that various modifications may be made without departing from the scope of the invention. For example, other types of powders and gases could be used for different types of additives. Accordingly, other embodiments are within the scope of the following claims.

## Claims

1. A method for heat treating metal alloy powder (12), comprising:
(a) introducing metal alloy powder (12) to a chamber having a floor (24) and at least one sidewall (22);
(b) flowing a fluidizing gas through the floor (24) and into the chamber to fluidize the metal alloy powder (12) in the chamber;
(c) flowing an additional gas (58) through the sidewall (22) into the chamber; and
(d) heating the chamber to heat treat the metal alloy powder (12) in the chamber.

2. The method of claim 1, further comprising flowing the additional gas (58) into the chamber at a different rate, for example, a lower flow rate, than the fluidizing gas.

3. The method of claim 1 or 2, wherein the chamber comprises an inner chamber (14) having the floor (24) and the sidewall (22), and an outer chamber (16) enclosing the inner chamber (14), step (b) comprises feeding the fluidizing gas to the floor (24) of the inner chamber (14) through a tube (36) connected to the floor (24), and step (c) comprises feeding the additional gas (58) to the outer chamber (16) and through the sidewall (22) to the inner chamber (14).

4. The method of any preceding claim, wherein the chamber is within a furnace (26), and wherein step (d) comprises heating the furnace (26).

5. The method of any preceding claim, wherein the fluidizing gas is:
different from the additional gas (58), and/or
selected from the group consisting of nitrogen, argon, helium and combinations thereof.

6. The method of any preceding claim, wherein the fluidizing gas and the additional gas (58) are preheated before introducing to the chamber.

7. The method of any preceding claim, wherein the floor (24) is a porous floor (24) and the sidewall (22) is a porous sidewall (22), step (b) flows the fluidizing gas through the porous floor (24) and step (c) flows the additional gas (58) through the porous sidewall (22).

8. The method of any preceding claim, wherein the metal alloy powder (12) is aluminum alloy powder, and the heating step degasses the aluminum alloy powder.

9. The method of any preceding claim, wherein the additional gas (58) and/or the fluidizing gas is a reactive gas for depositing a coating on the metal alloy powder (12).

10. The method of any preceding claim, further comprising removing heat treated metal alloy powder (12) from the chamber, and using the heat treated metal alloy powder (12) in an additive manufacturing process.

11. A system (10) for heat treating metal alloy powder (12), comprising:
an inner chamber (14) having a porous floor (24) and at least one porous sidewall (22);
an outer chamber (16), the inner chamber (14) being inside of the outer chamber (16) and defining an annular space (18) between the outer chamber (16) and the inner chamber (14), wherein the outer chamber (16) and the inner chamber (14) are inside a furnace (26);
a source (28) of fluidizing gas connected to the porous floor (24) through the annular space (18); and
a source (38) of additional gas (58) communicated with the porous sidewall (22) through the annular space (18).

12. The system of claim 11, further comprising a tube (36) extending from the source (28) of fluidizing gas, through the annular space (18), to the porous floor (24), wherein, optionally, the tube (36) is communicated with the porous floor (24) through a manifold (56) on the inner chamber (14) and enclosing the porous floor (24).

13. The system of claim 11 or 12, further comprising an outlet (52) from the inner chamber (14) passing through the outer chamber (16) and the furnace (26) for outlet of the fluidizing gas (58) and the additional gas from the inner chamber (14).

14. The system of any of claims 11 to 13, further comprising a thermocouple (27) communicated with the annular space (18), mass flow controllers (34, 44) and pressure sensors (48, 50) operatively associated with the source (28) of fluidizing gas and the source (38) of additional gas (58), wherein the thermocouple (27), the mass flow controllers (34, 44), the pressure sensors (48, 50) and the furnace (26) are connected with a control unit (62) for controlling flow rate of the fluidizing gas and the additional gas (58) and a temperature to which the furnace (26) is heated.

15. The system of any of claims 11 to 14, further comprising a screen (60) positioned over pores in the porous sidewall (22) to prevent escape of metallic alloy powder (12) through the pores; and/or
wherein the metallic alloy powder (12) comprises aluminum alloy powder, and the inner chamber (14) is made of or coated with stainless steel, porous ceramic or mixtures thereof.
